# EUROPÄISCHE PATENTANMELDUNG

(11) **EP 1 502 776 A2**
(43) Veröffentlichungstag der Anmeldung: **02.02.2005**
(21) Anmeldenummer: 04016929.4
(22) Anmeldetag: 19.07.2004
(51) Int. Cl.: B60D 1/00, B60P 3/36, B62D 63/06

(54) **Kombinationsfahrzeug**

(30) Priorität: 30.07.2003 DE 10334751
(71) Anmelder: Stursberg, Christian, Dipl.-Ing., 51467 Bergisch Gladbach (DE)
(72) Erfinder: Stursberg, Christian, Dipl.-Ing., 51467 Bergisch Gladbach (DE)
(74) Vertreter: Starke, Günter Dipl.-Ing.

(57) **Zusammenfassung**

Die Erfindung betrifft ein Kombinationsfahrzeug, bestehend aus einem Selbstfahrer (1) und einem Nutzadapter (2), die einfach miteinander verbindbar sind. Dies wird dadurch erreicht, dass die Verbindungseinrichtung (7) zwei heckseitig an dem Selbstfahrer (1) fahrzeugnah und beabstandet zueinander angeordnete Kupplungsdorne (6a,6b) aufweist, auf denen fest an dem Nutzadapter (2) angeordnete Kupplungsaugen (5a,5b) unabhängig voneinander verriegelbar festlegbar sind, und dass die Kupplungsaugen (5a,5b) um die Verbindungsachse der Kupplungsdorne (6a,6b) und um die Mittelachse jedes Kupplungsdorns (6a,6b) schwenkbar sind. Dadurch ist der Koppelvorgang wesentlich vereinfacht, da der Nutzadapter (2) nicht genau auf die Verbindungseinrichtung aufgesetzt werden muss.

## Beschreibung

Die Erfindung betrifft ein Kombinationsfahrzeug, bestehend aus einem Selbstfahrer mit einer Fahrzeugkarosserie, einem Motor, eine Vorderradachse bildenden Vorderrädern und eine Hinterradachse bildenden Hinterrädern und aus einem einachsigen Nutzadapter, wobei der Selbstfahrer über eine Verbindungseinrichtung mit dem Nutzadapter zu dem gegenüber dem Selbstfahrer verlängerten Kombinationsfahrzeug koppelbar ist.

Ein solches gattungsgemäßes Kombinationsfahrzeug ist aus der DE 37 07 544 A1 bekannt. Bei diesem Kombinationsfahrzeug wird der Nutzadapter über eine am Rahmenende des Selbstfahrers angeordnete zug- und druckfeste Verbindungseinrichtung starr an dem Selbstfahrer angeschlossen. Der Freiraum zwischen dem Selbstfahrer und dem Nutzadapter ist durch eine Verblendung allseitig abgedeckt. Der Vorgang des Ankoppelns und des Abkoppelns des Nutzadapters erfordert der seitlichen und höhenmäßigen Ausrichtung des Nutzadapters große Präzision, da der Nutzadapter genau auf diese Verbindungseinrichtung aufgesetzt werden muss.

Der Erfindung liegt die Aufgabe zugrunde, ein Kombinationsfahrzeug bestehend aus einem Selbstfahrer und einem Nutzadapter bereitzustellen, die einfach miteinander verbindbar sind.

Diese Aufgabe wird dadurch gelöst, dass die Verbindungseinrichtung zwei heckseitig an dem Selbstfahrer fahrzeugnah und beabstandet zueinander angeordnete Kupplungsdorne aufweist, auf denen fest an dem Nutzadapter angeordnete Kupplungsaugen unabhängig voneinander verriegelbar festlegbar sind, und dass die Kupplungsaugen um die Verbindungsachse der Kupplungsdorne und um die Mittelachse jedes Kupplungsdorns schwenkbar sind. Dadurch ist der Ankoppelvorgang wesentlich vereinfacht, da der Nutzadapter nicht genau auf die Verbindungseinrichtung aufgesetzt werden muss, sondern zunächst die Kupplungsaugen gleichzeitig oder nacheinander bei nach hinten abgeschwenkten Nutzadapter durch eine Bewegung des Nutzadapters in Richtung zu dem Selbstfahrer zu den Kupplungsdornen ausgerichtet, auf die Kupplungsdorne aufgesetzt und verriegelt werden. Der Nutzadapter ist folglich im Idealfall genau in Verlängerung hinter dem Selbstfahrer ausgerichtet, normalerweise aber schräg zu dem Selbstfahrer angeordnet.

In Weiterbildung der Erfindung weist die Verbindungseinrichtung einen Träger auf, an dem die Kupplungsdorne befestigt sind. An dem Träger sind wiederum in weiterer Ausgestaltung Haltestangen angebracht, die an dem Selbstfahrer befestigt sind. Diese Haltestangen sind bevorzugt an Befestigungspunkten einer optionalen Anhängerkupplung an dem Selbstfahrer befestigt. Diese Ausbildungen ermöglichen im Idealfall ohne Änderung des Selbstfahrers die Befestigung der Verbindungseinrichtung an dem Selbstfahrer, da die Befestigungspunkte die auftretenden Belastungen problemlos aufnehmen können. Dabei kann es weiterhin vorgesehen sein, die Befestigungseinrichtung ähnlich wie eine abnehmbare Anhängerkupplung teilweise - insbesondere den Träger mit den Kupplungsdornen - demontierbar auszugestalten.

In weiterer Ausgestaltung der Erfindung sind an dem Träger zwei Kupplungsverschlüsse in zwei definierte Stellungen verschiebbar angeordnet, wobei in der ersten Stellung die Kupplungsdorne und die Kupplungsaugen entriegelt und in der zweiten Stellung die Kupplungsdorne und die Kupplungsaugen verriegelt sind. Die Verriegelung der Kupplungsaugen auf den Kupplungsdornen erfolgt, um eine feste Verbindung zwischen dem Selbstfahrer und dem Nutzadapter herzustellen. Dabei sind die Kupplungsverschlüsse so ausgebildet, dass ein Lösen derselben nur bei abgestützten Nutzadapter möglich ist, um ein unkontrolliertes Wegkippen des Nutzadapters zu verhindern. Dies wird dadurch erreicht, dass nur in abgestützten Zustand des Nutzadapters die Kupplungsverschlüsse entlastet und nur in diesem Zustand verschiebbar sind.

In weiterer Ausbildung ragt der Nutzadapter auf das Dach des Selbstfahrers und es sind trennbare Verbindungselemente zum Verbinden des Selbstfahrers und des Nutzadapters vorgesehen. Dabei sind in jeweils einer Weiterbildung die Verbindungselemente auf dem Dach des Selbstfahrers im Bereich der tragenden Dach-Säulen (A-, B-, C-Säulen) auf Fahrer- und Beifahrerseite angeordnet. Zusätzlich oder alternativ (beispielsweise bei nicht auf das Dach ragenden Nutzadapter) können Verbindungselemente am Heck des Selbstfahrers angeordnet sein. Die Verbindungselemente weisen Verbindungsdorne und Verbindungsnuten auf, die selbstzentrierend und verriegelbar zusammenwirken. Damit ist eine einfach und zuverlässige Kopplung des Selbstfahrers mit dem Nutzadapter möglich.

In Weiterbildung der Erfindung weist der Nutzadapter einfahrbare und ausfahrbare Bodenstützen oder Stützräder auf. Durch die Höhenverstellung der Bodenstützen oder Stützräder in Verbindung mit ebenfalls höhenverstellbaren Laufrädern kann die Neigung des Nutzadapters verändert werden. Zu Beginn des Ankoppelvorgangs wird der Nutzadapter nach hinten geneigt und nach dem Aufsetzen der Kupplungsaugen auf die Kupplungsdorne und der anschließenden Verriegelung wieder nach vorne geneigt. Dadurch werden die Verbindungsdorne passgenau in die Verbindungsnuten geführt.

In weiterer Ausgestaltung sind die Laufräder des einachsigen Nutzadapters antreibbar. Dies ist insbesondere unter dem Aspekt einer einfachen Handhabung und aus Sicherheitsaspekten vorteilhaft, da mit dieser Ausgestaltung von einer Person alleine auch ein entsprechend großer Nutzadapter gekoppelt werden kann. Dabei erfolgt der Antrieb beispielsweise durch einen elektrischen oder einen hydraulischen Antrieb. Angetrieben werden die Laufräder zum einfachen Verfahren des Nutzadapters insbesondere während des Koppelvorgangs. Im angekoppelten Zustand wird der Antrieb nicht benötigt und von den Laufrädern getrennt. Um einen Höhenausgleich je nach Bodenverhältnissen und/oder konstruktiven Gegebenheiten zwischen dem Selbstfahrer und dem Nutzadapter herzustellen, sind die Laufräder mit einer für jedes Laufrad getrennt wirksamen Niveauregulierung versehen, die auch als niveauregulierende Luftfederung ausgebildet sein kann. Mit dieser Einrichtung kann jede Seite des Nutzadapters um beispielsweise 120 mm angehoben oder abgesenkt werden. Sowohl an den Laufrädern als auch an den vorderen und hinteren Bodenstützen oder Stützrädern können Druckbeziehungsweise Kraftsensoren angebracht sein. Mit Hilfe dieser Druck- beziehungsweise Kraftsensoren kann der Koppelvorgang zusätzlich gesteuert und überwacht werden. Während des Fahrbetriebs des Kombinationsfahrzeugs werden die Messwerte der an den Laufrädern angebrachten Druck- beziehungsweise Kraftsensoren für eine Verbesserung der Fahrdynamik und Fahrstabilität ausgewertet, indem beispielsweise Rückschlüsse auf einwirkenden Seitenwind und eine sich ändernde Gewichtsverteilung möglich sind.

Zusätzlich sind in weiterer Ausgestaltung die Laufräder des einachsigen Nutzadapters lenkbar. Diese Lenkvorrichtung wird während des Koppelvorgangs zum einfachen Rangieren des Nutzadapters und während des Fahrbetriebs des Kombinationsfahrzeugs für die Nachlaufsteuerung der Laufräder des Nutzadapters zu der Hinterradachse des Selbstfahrers eingesetzt. Dabei ist dann der Lenkeinschlag der Vorderräder des Selbstfahrers die Führungsgröße für den Nachlaufeinschlag. Die Sollwertübergabe des Lenkeinschlags der Vorderräder des Selbstfahrers an die Laufräder des Nutzadapters erfolgt über Funk oder eine Kabelsteckverbindung. Gesteuert wird die Niveauregulierung und der Antrieb der Laufräder des Nutzadapters sowie gegebenenfalls die Lenkvorrichtung und die Höhenverstellung der Bodenstützen oder Stützräder von einer zentralen Bedieneinheit, die als Fernbedienung ausgebildet sein kann.

In Weiterbildung der Erfindung sind die elektrischen Schaltkreise von Selbstfahrer und Nutzadapter über eine Stecker-Steckdosen-Verbindung verbindbar. Bevorzugt sind die Laufräder des Nutzadapters ebenso wie die Räder des Selbstfahrers mit einem ABS-System ausgestattet. Entsprechend sind die Bremskreise und die Bremssteuerung (ABS, ESP, usw.) von Selbstfahrer und Nutzadapter über eine Stecker-Steckdosen-Verbindung verbindbar. Alternativ kann das ABS des Nutzadapters über Kraftmesssensoren, deren Signale bei Bedarf verstärkt werden und die bevorzugt an der Deichsel des Nutzadapters angebracht sind, gesteuert werden. Dabei kommt bevorzugt ein Drei-Kreis-ABS-System mit zwei Kreisen für den Selbstfahrer und einem Kreis für den Nutzadapter zum Einsatz.

Bevorzugt ist der Nutzadapter ein Wohnfahrzeugadapter. In diesem Fall ist die Rückwand des Selbstfahrers und die Frontwand des Wohnfahrzeugadapters wegklappbar, wegschiebbar oder entfernbar, sodass ein direktes ungehindertes Begehen der beiden Fahrzeugteile des Kombinationsfahrzeuges möglich ist. Dabei ist die Rückwand des Selbstfahrers bevorzugt eine serienmäßige Hecktüre. Weiterhin kann zur Erhöhung der Stehhöhe in dem Selbstfahrer bei Bedarf ein Querriegel und ein Hardtopaufsatz, der gegebenenfalls anstelle des ursprünglichen Dachs eingesetzt wird, herausgenommen werden. Der Querriegel sorgt für eine stabilisierende Verbindung der hinteren Seitenwände, die bei einer Entfernung des Serien-Dachs nicht mehr in ursprünglichen Umfang gegeben ist. Anstelle des Hardtopaufsatzes und der herausnehmbaren Hecktür können Jalousien beispielsweise als Urlaubsvariante eingesetzt werden. Die Jalousien können in einem Kastenprofil auf- und abgerollt werden. An Stelle des die hinteren Seitenwände verbindenden Querriegels kann auch das Kastenprofil eingesetzt werden, so dass bei ausgerollten Jalousien und abgekoppeltem Nutzadapter ein vollwertiges geschlossenes Fahrzeug bereitsteht. Für eine dichte Verbindung der beiden Fahrzeugteile zueinander sind umlaufende Dichtprofile an einem oder beiden Fahrzeugteilen vorgesehen, die ggf. unabhängig voneinander eine dichte Verbindung herstellen. Neben der Ausbildung des Nutzadapters als Wohnfahrzeugadapter kann dieser auch als Nutzfahrzeugadapter mit einer Ladefläche oder einem Laderaum vorgesehen sein. Auch kann der Nutzfahrzeugadapter mit einem Spezialaufbau, beispielsweise einem Kran, versehen sein. Alle diese möglichen Nutzadapter können wahlweise mit dem Selbstfahrer verbunden werden.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Fig. 1:: Selbstfahrer und Nutzadapter im gekoppelten Zustand,
- Fig. 2:: Selbstfahrer und Nutzadapter in einer für den Koppelvorgang vorbereiteten Stellung,
- Fig. 3:: eine Ansicht der Verbindungseinrichtung,
- Fig. 4:: eine Detailansicht der Verbindungseinrichtung,
- Fig. 5:: einen verschwenkten Schnitt durch die Detailansicht gemäß Fig. 4,
- Fig. 6:: eine Draufsicht auf den Selbstfahrer und den Nutzadapter während des Koppelvorgangs und
- Fig. 7:: eine Draufsicht auf den Selbstfahrer und den Nutzadapter nach Beendigung des Koppelvorgangs.

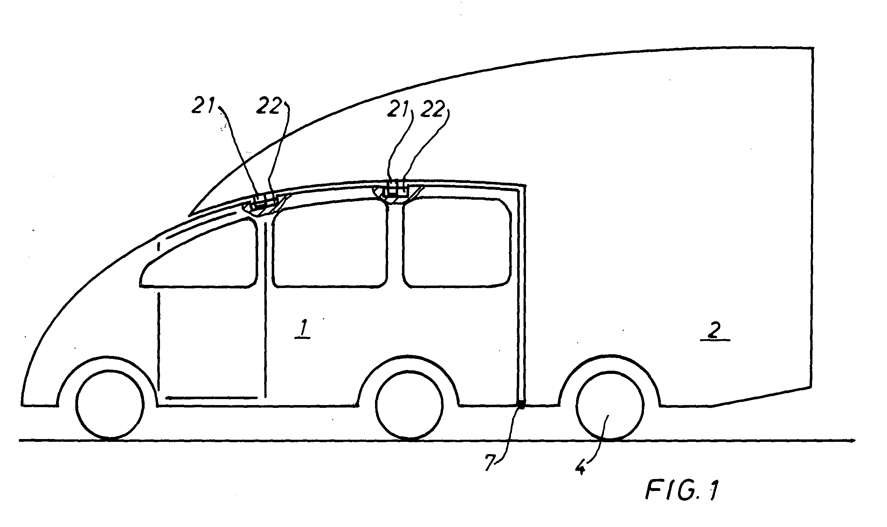

Das in Fig. 1 schematisch dargestellte Kombinationsfahrzeug besteht aus einem Selbstfahrer 1 und einem Nutzadapter 2, die miteinander gekoppelt sind. Der Selbstfahrer 1 ist vorzugsweise auf Basis eines bestehenden Pkws, Kleinbusses oder Transporters entwickelt und beispielsweise als Zweisitzer, Viersitzer oder Sechssitzer mit insbesondere einem freibleibenden Mittelgang ausgebildet. Im diesem Fall kann der Selbstfahrer 1 bezüglich seiner gesamten Karosserie einschließlich Vorderradachse, Hinterradachse, Motor sowie dem Vorder- und/oder Hinterradantrieb unverändert ausgebildet sein, bevorzugt ist aber die Rückwand oder Hecktür des Selbstfahrers und die Frontwand oder die Fronttür des Wohnfahrzeugadapters wegklappbar, wegschiebbar oder entfernbar, sodass ein direktes ungehindertes Begehen der beiden Fahrzeugteile des Kombinationsfahrzeuges möglich ist. Der Selbstfahrer 1 weist bevorzugt einen langen Radstand auf. Der Nutzadapter 2 kann von einem bekannten Wohnanhänger abgeleitet sein, ähnelt einem solchen aber zumindest im äußeren Erscheinungsbild. Der Selbstfahrer 1 und der Nutzadapter 2 bilden im gekoppelten Zustand ein Kombinationsfahrzeug, das einem Wohnmobil ähnelt und wie ein solches fahrbar ist. Im abgedockten Zustand des Nutzadapters 2 ist jedoch der Selbstfahrer 1 eigenständig fahrbar und bildet nach den beschriebenen Umbauten ein vollwertiges Fahrzeug. Die besonderen Vorzüge des Kombinationsfahrzeuges im angedockten Zustand bestehen darin, dass das Kombinationsfahrzeug als Einheit wie ein Wohnmobil bezüglich der Fahrphysik, des Komforts und der gesetzlichen Auflagen fahrbar ist. Diese Fahrzeugform weist in allen gerade genannten Punkten Vorteile gegenüber einem Gespann Pkw-Wohnanhänger auf. Dagegen bietet das Kombinationsfahrzeug im abgedockten Zustand die Vorteile, die ein Pkw-Wohnanhänger Gespann im getrennten Zustand bietet, dass nämlich der Nutzadapter an einem Stellplatz verbleiben kann und der Selbstfahrer als vollwertiges Fahrzeug genutzt werden kann. In diesem Zustand ist das Wohnmobil nachteilig, da systembedingt ein Fahrzeug vorhanden ist, das nicht getrennt werden kann. Der Nutzadapter 2 kann selbstverständlich auch mit einer Ladefläche, einem Laderaum oder speziellen Aufbauten versehen sein, wobei unterschiedliche Ausbildungen eines solchen Nutzadapters 2 mit einem Selbstfahrer 1 wahlweise koppelbar sind.

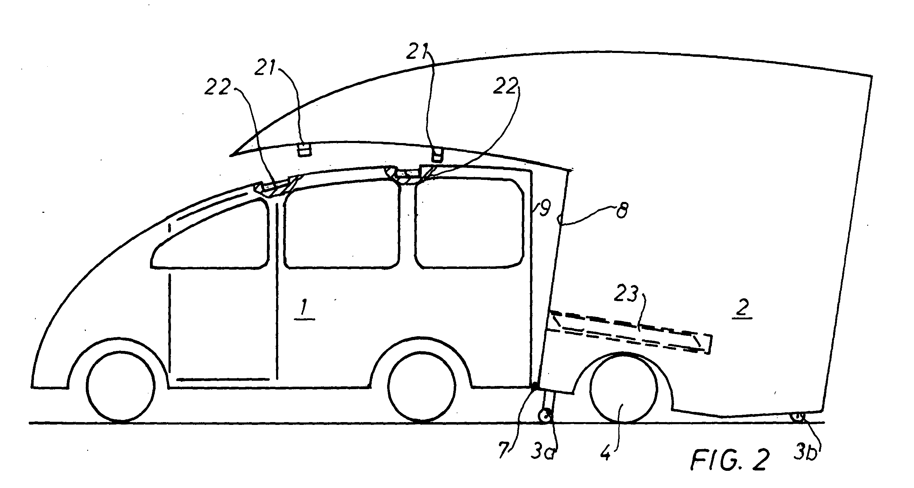

In Figur 2 ist der Nutzadapter 2 in eine gekippte Koppelstellung gebracht und der Koppelvorgang schon teilweise durchgeführt. Die nach hinten gekippte Stellung wird durch vordere und hintere Bodenstützen oder Stützräder 3a, 3b zusammenwirkend mit höhenverstellbaren Laufrädern 4a, 4b eingestellt, wobei die vorderen Bodenstützen oder Stützräder 3a seitlich am Bugs des Nutzadapters 2 angeordnet ist und so eingestellt wird, dass bei einer eingestellten Höhe der Laufräder 4a, 4b und gleichzeitiger entgegengesetzter Einstellung der vorzugsweise einen hinteren Bodenstütze oder des einen Stützrades 3b der Nutzadapter in die nach hinten gekippte Stellung verbracht ist. Kupplungsaugen 5a, 5b sind vorzugsweise an einer kurzen Deichsel 13a, 13, die fest an am Bug des Nutzadapters 2 beabstandet zueinander befestigt sind, angebracht. Die geneigte Stellung während des Koppelvorgangs ist erforderlich, damit während des Ankoppelvorgangs zunächst der Nutzadapter 2 so an den Selbstfahrer 1 heranbewegt werden kann, dass nur die Kupplungsaugen 5a, 5b auf Kupplungsdorne 6a, 6b einer an dem Selbstfahrer 1 montierten Verbindungseinrichtung 7 aufgesetzt und verriegelt werden können, ohne dass außerhalb der von den Kupplungsaugen 5a, 5b und der Kupplungsdorne 6a, 6b gebildeten Verbindungsebene der Bug 8 des Nutzadapters 2 und das Heck 9 des Selbstfahrers 1 aneinander liegen.

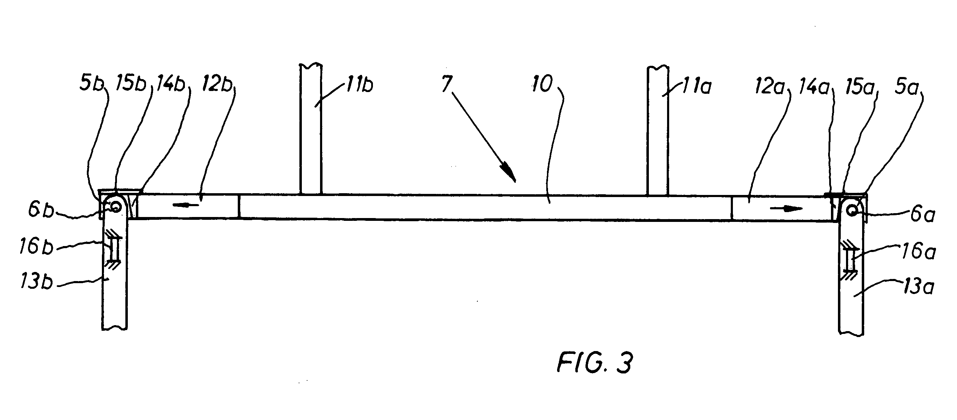

In Fig. 3 ist die Verbindungseinrichtung 7 als Einzelteil dargestellt. Die Verbindungseinrichtung 7 weist einen Träger 10 auf, der über Haltestangen 11, 11b an der Karosserie beziehungsweise an dem Rahmen, vorzugsweise an den Befestigungspunkten einer optionalen Anhängerkupplung, des Selbstfahrers 1 befestigt ist. Endseitig sind an dem Träger die Kupplungsdorne 6a, 6b befestigt, auf die mit dem Nutzadapter 2 über Deichseln 13a, 13b verbundenen Kupplungssaugen 5a, 5b aufsetzbar und mit Kupplungsverschlüssen 12a, 12b festlegbar sind. Die Kupplungsverschlüsse 12a, 12b sind in dieser Figur schematisch in der entriegelten Stellung dargestellt. Um beim Koppelvorgang die Kupplungsaugen 5a, 5b genau über den Kupplungsdornen 6a, 6b auszurichten, sind an den Kupplungsverschlüssen 12a, 12b neben den Kupplungsdornen 6a, 6b Seitenbegrenzungen 14a, 14b und an dem Träger 10 vor den Kupplungsdornen 6a, 6b Tiefenbegrenzungen 15a, 15b angebracht. An den Deichseln sind Kraftmesssensoren 16a, 16b befestigt, die beispielsweise als Dehnungsmessbrücken ausgebildet sind, und die in den Deichseln 13a, 13b auftretenden Druck- und Zugkräfte ermitteln. Die entsprechenden Messdaten können beispielsweise für die Steuerung eines Antiblockiersystems ausgewertet werden.

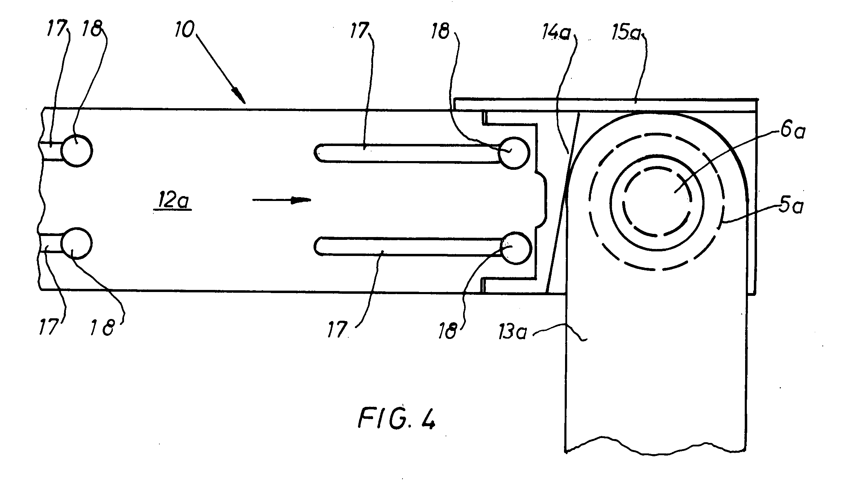

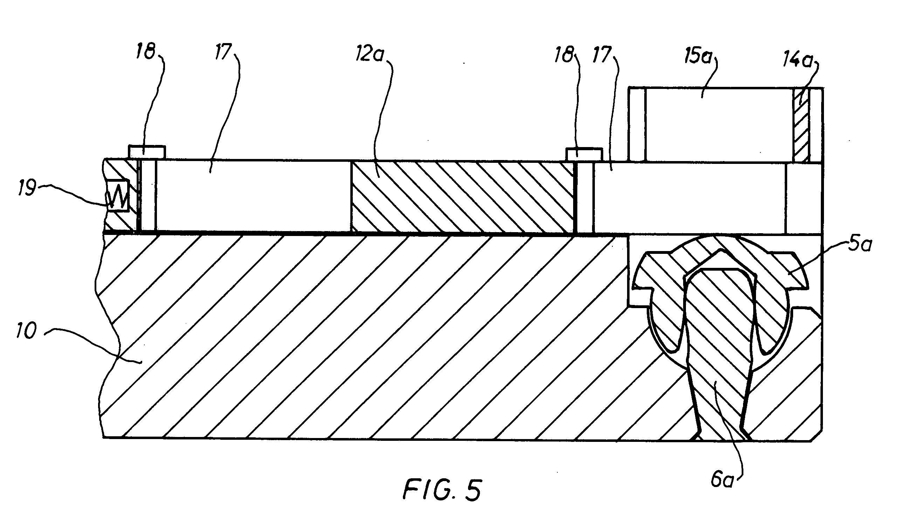

Fig. 4 und zeigt in einer Detailansicht die Verbindung des Kupplungsauges 5a mit dem Kupplungsdorn 6a mit entriegeltem Kupplungsverschluss 12a gemäß Fig. 3. Der Kupplungsverschluss 12a weist Schlitze 17 auf, durch die Befestigungsschrauben 18 hindurchragend in dem Träger 10 eingeschraubt sind. Der Kupplungsverschluss 12a ist somit in Pfeilrichtung soweit verschiebbar, bis er den Kupplungsdorn 6a und das Kupplungsauge 5a abdeckt und somit eine Verriegelung dieser Bauteile erreicht ist. Die Verschiebebewegung in die verriegelte Position wird bewirkt durch eine Feder 19 (Fig. 5), die an dem Träger 10 abgestützt ist. Ein Riegel, der manuell betätigt wird, fixiert den Kupplungsverschluss in der entriegelten und in der verriegelten Position.

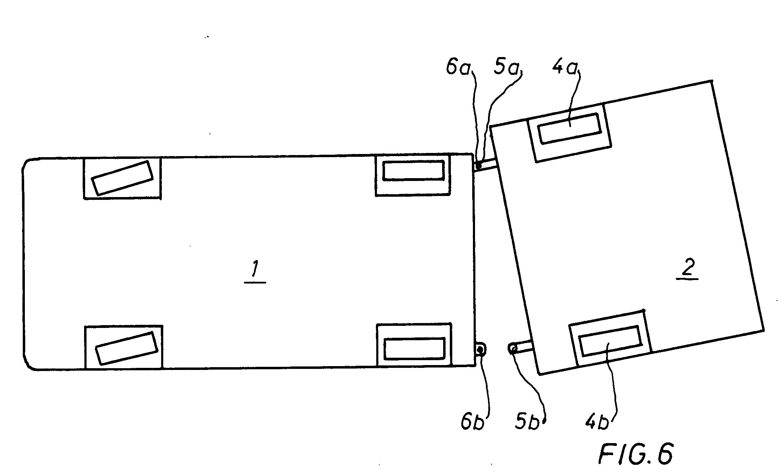

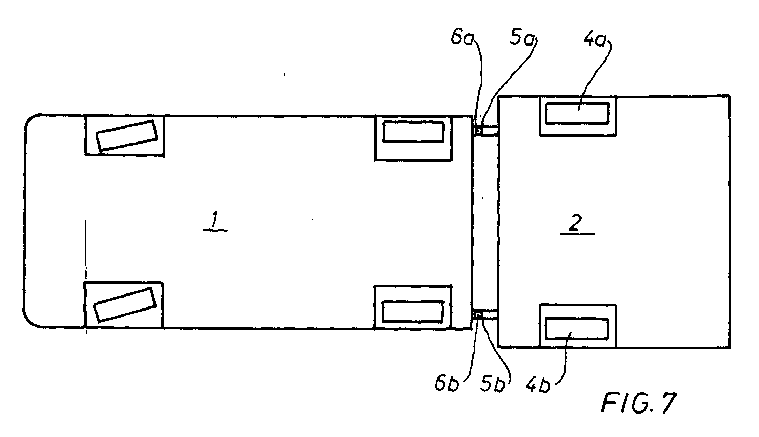

Zur Durchführung des eigentlichen Koppelvorgangs wird der Nutzadapter 2 nach Figur 6 beispielsweise durch getrennte Inbetriebnahme des Antriebs der Laufräder 4a, 4b des Nutzadapters so hinter den Selbstfahrer 1 gefahren, dass das Kupplungsauge 5a über den Kupplungsdorn 6a platziert ist. Dabei ist der Nutzadapter mit Hilfe der einzeln höhenverstellbaren Laufräder 4a, 4b und der Bodenstützen oder Stützrädern 3a, 3b in eine nach hinten gekippte Stellung gebracht. Danach wird das Kupplungsauge 5a durch beispielsweise eine gleichzeitige Verstellbewegung des Laufrads 4a und der Bodenstützen oder Stützräder 3a, 3b auf den Kupplungsdorn 6a abgesenkt und der Kupplungsverschluss 12a in die verriegelte Stellung verstellt. Danach wird der Koppelvorgang analog für die gegenüberliegende Seite durchgeführt, wobei die Ausrichtung des Selbstfahrers 1 und des Nutzadapters 2 in die in Fig. 6 und Fig. 7 dargestellte Position bevorzugt durch den dargestellten Einschlag der Lenkung des Selbstfahrers 1 bei gleichzeitiger Schiebebewegung des Selbstfahrers 1 durch den Nutzadapter 2 erfolgt. Sollte der Schwerpunkt des Nutzadapters 2 in Fahrtrichtung gesehen eindeutig hinter dessen Achse liegen, kann gegebenenfalls auf den Einsatz der vorderen Bodenstütze oder des vorderen Laufrads 3a für den Koppelvorgang ganz verzichtet werden. Danach werden die elektrischen Kreise ebenso wie die Bremskreise von dem Nutzadapter 2 und Selbstfahrer 1 miteinander verbunden. Gleichzeitig oder danach wird der Nutzadapter 2 durch entsprechende Verstellung der Bodenstützen oder Stützräder 3a, 3b und der Laufräder 4a, 4b um die durch die Kupplungsdorne 6a, 6b gebildete Achse auf den Selbstfahrer 1 zu geschwenkt. Dabei werden durch Absenken des auf das Dach des Selbstfahrers 1 ragenden Teils des Nutzadapters 2 Verbindungsdorne 21 in Verbindungsadapter 22, die auf dem Dach des Selbstfahrers 1 im Bereich der tragenden Säulen (A-, B-, C-Säulen) auf Fahrer- und Beifahrerseite angeordnet sind, eingeführt und verriegelt. Der Ankoppelvorgang ist damit abgeschlossen. Abgekoppelt wird der Nutzadapter 2 durch einen sinngemäß umgekehrten Ablauf der einzelnen Arbeitsschritte. Im abgekoppelten Zustand ist unter dem Dachüberstand im Bug des Nutzadapters ein Vorzelt befestigbar. Weiterhin ist im Bug des Nutzadapters 2 eine ausziehbare Leiter 23 (Fig. 2) untergebracht. Diese Leiter ist so ausgelegt, dass diese die vordere Bodenstütze oder das vordere Stützrad 3a für einen sicheren Stand des abgekoppelten Nutzadapters 2 ersetzt. Hierzu ist die Neigung Treppe in verschiedenen Stellungen einstellbar.

## Patentansprüche

1. Kombinationsfahrzeug, bestehend aus einem Selbstfahrer mit einer Fahrzeugkarosserie, einem Motor, eine Vorderradachse bildenden Vorderrädern und eine Hinterradachse bildenden Hinterrädern und aus einem einachsigen Nutzadapter, wobei der Selbstfahrer über eine Verbindungseinrichtung mit dem Nutzadapter zu dem gegenüber dem Selbstfahrer verlängerten Kombinationsfahrzeug koppelbar ist,
**dadurch gekennzeichnet, dass** die Verbindungseinrichtung (7) zwei heckseitig an dem Selbstfahrer (1) fahrzeugnah und beabstandet zueinander angeordnete Kupplungsdorne (6a, 6b) aufweist, auf denen fest an dem Nutzadapter (2) angeordnete Kupplungsaugen (5a, 5b) unabhängig voneinander verriegelbar festlegbar sind, und dass die Kupplungsaugen (5a, 5b) um die Verbindungsachse der Kupplungsdorne (6a, 6b) und um die Mittelachse jedes Kupplungsdorns (6a, 6b) schwenkbar sind.

2. Kombinationsfahrzeug nach Anspruch 1,
**dadurch gekennzeichnet, dass** die Verbindungseinrichtung (7) einen Träger (10) aufweist, an dem die Kupplungsdorne (6a, 6b) befestigt sind.

3. Kombinationsfahrzeug nach Anspruch 2,
**dadurch gekennzeichnet, dass** an dem Träger (10) Haltestangen (11a, 11b) angebracht sind, die an dem Selbstfahrer (1) befestigt sind.

4. Kombinationsfahrzeug nach Anspruch 3,
**dadurch gekennzeichnet, dass** die Haltestangen (11a, 11b) an den Befestigungspunkten einer optionalen Anhängerkupplung an dem Selbstfahrer (1) befestigt sind.

5. Kombinationsfahrzeug nach einem der Ansprüche 2 bis 4,
**dadurch gekennzeichnet, dass** an dem Träger (10) zwei Kupplungsverschlüsse (12a, 12b) in zwei definierte Stellungen verschiebbar angeordnet sind, wobei in der ersten Stellung die Kupplungsdorne (6a, 6b) und die Kupplungsaugen (5a, 5b) entriegelt und in der zweiten Stellung die Kupplungsdorne (6a, 6b) und die Kupplungsaugen (5a, 5b) verriegelt sind.

6. Kombinationsfahrzeug nach einem der vorherigen Ansprüche,
**dadurch gekennzeichnet, dass** der Nutzadapter (2) auf das Dach des Selbstfahrers (1) ragt und im Dachbereich trennbare Verbindungselemente zum Verbinden des Selbstfahrers (1) und des Nutzadapters (2) vorgesehen sind.

7. Kombinationsfahrzeug nach Anspruch 6,
**dadurch gekennzeichnet, dass** die Verbindungselemente auf dem Dach des Selbstfahrers (1) im Bereich von tragenden Dach-Säulen auf Fahrer- und Beifahrerseite angeordnet sind.

8. Kombinationsfahrzeug nach einem der Ansprüche 6 oder 7,
**dadurch gekennzeichnet, dass** die Verbindungselemente Verbindungsdorne (21) und Verbindungsnuten (22) aufweisen, die selbstzentrierend und verriegelbar zusammenwirken.

9. Kombinationsfahrzeug nach einem der vorherigen Ansprüche,
**dadurch gekennzeichnet, dass** der Nutzadapter (2) einfahrbare und ausfahrbare Bodenstützen oder Stützräder (3a, 3b) aufweist.

10. Kombinationsfahrzeug nach einem der vorherigen Ansprüche,
**dadurch gekennzeichnet, dass** die Laufräder (4a, 4b) des Nutzadapters (2) antreibbar sind.

11. Kombinationsfahrzeug nach einem der vorherigen Ansprüche,
**dadurch gekennzeichnet, dass** die Laufräder (4a, 4b) des Nutzadapters (2) lenkbar sind.
